# EUROPÄISCHE PATENTANMELDUNG

(11) **EP 0 799 780 A2**
(43) Veröffentlichungstag der Anmeldung: **08.10.1997**
(21) Anmeldenummer: 97104935.8
(22) Anmeldetag: 22.03.1997
(51) Int. Cl.: B65G 57/11

(54) **Palettiervorrichtung für Riespakete**

(30) Priorität: 04.04.1996 DE 19613435
(71) Anmelder: E.C.H. WILL GmbH, D-22529 Hamburg (DE)
(72) Erfinder: Rann, Harald, 22417 Hamburg (DE)
(74) Vertreter: Hiss, Ludwig, Pat. Ass. Dipl.-Ing.

(57) **Zusammenfassung**

Es wird eine Palettiervorrichtung für verpackte Stapel (2) aus Papierbögen oder dergl. beschrieben. Diese Vorrichtung weist einen höhenverstellbaren Palettentisch (3) auf, auf dem jeweils eine zu beladende Palette (1) bereitgehalten wird. Es ist ein Zuförderer (4) vorgesehen, dessen Ablageende (38) in Förderrichtung (21) über dem Palettentisch (3) vor und zurück verfahrbar ist. Zusätzlich ist der Zuförderer (4) über die ganze Breite der Paletten (1) quer zu seiner Förderrichtung (21) verfahrbar. Die Beschickung des Zuförderers (4) erfolgt über eine stationäre Beschickungseinrichtung (7) und einen Zwischenförderer (6), der seine Förderrichtung in Abhängigkeit von der Querposition des Zuförderers (4) ändert.

Diese Vorrichtung bietet den Vorteil, daß die Pakete (2) mit hoher Zuführ- und Ablagerate in frei wählbarer Anordnung auf den Paletten aufgestapelt werden können.

## Beschreibung

Die Erfindung betrifft eine Palettiervorrichtung, insbesondere für Stapel aus Papierbögen oder dergleichen, mit einem Palettentisch und einem Zuförderer, dessen Ablageende in Förderrichtung über dem Palettentisch vor und zurück verfahrbar ist.

Mit dem Ausdruck 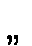 Riespakete" werden im hier vorliegenden Zusammenhang kurz verpackte Papierstapel bezeichnet, die aus aufeinandergeschichteten Bögen aus Papier oder ähnlichem Material wie Karton, Kunststoff oder dergleichen gebildet sind. Die Bezeichnung soll Stapel aus Bögen beliebiger Formate, beliebigen Materials und beliebiger Anzahl umfassen. Unter Riespaketen werden hier auch Kartons verstanden, die ihrerseits mehrere verpackte, banderolierte oder unverpackte Stapel aus Papier oder dergleichen enthalten. Die Riespakete sind normalerweise quaderförmig und haben entsprechend der Größe der in ihnen enthaltenen Bögen eine rechteckige Grundfläche. Zum Zwecke der Lagerung oder des Versandes werden die Pakete nach ihrer Fertigstellung in einer oder mehreren Schichten bzw. Lagen auf Paletten abgelegt. Auch andere Gegenstände können auf diese Weise palettiert werden.

Im deutschen Gebrauchsmuster G 94 18 577.8 U1 ist eine Palettiervorrichtung der eingangs angegebenen Art beschrieben. Mit dieser Vorrichtung werden Stapel aus Verpackungszuschnitten auf Paletten gestapelt. Dazu ist ein Transportband vorgesehen, dessen Breite der Palettenbreite gleich ist. Die abzulegenden Stapel werden auf dem Transportband in der seitlichen Anordnung reihenweise zugeführt, in der sie auf der Palette abgelegt werden. Die Ablage erfolgt über das vor und zurück verfahrbare Ablageende des Transportbandes zunächst auf einer Zwischenablage, auf der eine komplette Schicht von Stapeln gebildet wird, die schließlich insgesamt auf der unter der Zwischenablage positionierten Palette deponiert wird. Hierbei ist also eine mehrfache Übergabe der Stapel erforderlich, was die Bauhöhe der Vorrichtung vergrößert und den funktionstechnischen Aufwand erhöht.

Der Erfindung liegt die Aufgabe zugrunde, eine weitere Palettiervorrichtung der eingangs angegebenen Art für Riesstapel vorzuschlagen.

Gelöst wird diese Aufgabe erfindungsgemäß dadurch, daß wenigstens das Ablageende des Zuförderers über dem Palettentisch zusätzlich auch quer zur Förderrichtung verfahrbar ist. Damit ist eine gezielte Ablage von einreihig hintereinander zugeführten Paketen direkt auf der Palette in einer bestimmten Anordnung und Reihenfolge möglich. Eine bevorzugte Weiterbildung der Erfindung besteht darin, daß der ganze Zuförderer im wesentlichen über die gesamte Palettenbreite quer zu seiner Förderrichtung verfahrbar ist. Durch diese parallele Querverschiebung des Zuförderers ist die Orientierung der Pakete unabhängig von ihrem Ablageort auf der Palette immer gleich.

Weitere Fortführungen, Weiterbildungen und vorteilhafte Ausgestaltungen der Erfindung sind in den Unteransprüchen 3 bis 14 enthalten.

Die Weiterbildung der erfindungsgemäß vorgeschlagenen Vorrichtung nach dem Anspruch 3, nach der der Zuförderer aus wenigstens zwei in Förderrichtung aufeinanderfolgenden Teilförderern besteht, von denen der eine als Übergabeförderer kontinuierlich fördert und der andere als Ladeförderer intermittierend läuft und jeweils für das Ablegen eines Paketes auf der Palette angehalten wird, ermöglicht eine hohe Förder- und Ablagerate der Palettiervorrichtung. Die Ausbildung der Vorrichtung nach Anspruch 4 bedeutet einen einfachen und rationellen konstruktiven Aufbau. Die Verwendung von Bandförderern als Teilförderer des Zuförderers gemäß Anspruch 5 erlaubt an den Ablageenden Umlenkungen geringen Durchmessers, wodurch die Ablagehöhe weitgehend reduziert werden kann. Die Ausbildung des Ablageendes des Zuförderers gemäß Anspruch 6 hat den Vorteil, daß die Pakete auch in schmale Lücken zwischen bereits aufgestapelten Paketen eingeführt werden können. Die Ausbildung der Vorrichtung nach Anspruch 7 erhöht ihre Flexibilität, weil die Zuführung und die Ablage der Pakete optimal an die unterschiedlichsten Bedingungen angepaßt werden können. Die Ausrichteinheit der Vorrichtung nach der Erfindung gemäß Anspruch 8 gewährleistet, daß die abzulegenden Gegenstände immer richtig in der gewünschten Orientierung auf der Palette ankommen.

Die Ansprüche 9 bis 12 stellen Weiterbildungen der Vorrichtung nach der Erfindung dar, die es ermöglichen, die auf der Palette abzulegenden Pakete vorzugsweise einreihig hintereinander von einer ortsfesten Beschickungseinrichtung her in wechselnden Richtungen zur jeweils aktuellen Position des verfahrbaren Aufgabeendes des Zuförderers hin zu transportieren. Dabei ist sichergestellt, daß die Pakete eine vorgesehene Orientierung im wesentlichen beibehalten, auch wenn die Förderrichtung eine starke seitliche Komponente hat. Die Ausbildung der Vorrichtung nach Anspruch 13 gewährleistet, daß die auf der Palette abzulegenden Pakete in die für die Ablage erforderliche Orientierung gedreht werden können. Die Merkmale des Anspruchs 14 dienen der Ablage der Pakete auf der Palette in mehreren Schichten übereinander.

Mit der Vorrichtung nach der Erfindung werden die aufzustapelnden Pakete einzeln nacheinander der Palette zugeführt und abgelegt, wodurch sich eine hohe Flexibilität ergibt, weil die Orientierung der Pakete und ihre Anordnung auf der Palette weitgehend frei wählbar sind. Die Pakete können in verschiedenen Ausrichtungen aufgestapelt werden, was eine stabile Stapelkonfiguration auf der Palette bewirkt. Die Beweglichkeit des Ablageendes des Ladeförderers in Förderrichtung und die Verfahrbarkeit des Zuförderers quer zu seiner Förderrichtung können auf Paletten unterschiedlicher Größe eingestellt werden. Der Aufbau der Vorrichtung nach der Erfindung ist konstruktiv sehr einfach und wenig aufwendig. Die Ablagehöhe vom Ablageende des Ladeförderers zur Oberfläche der Palette bzw. der bereits auf den der Palette befindlichen Paketschicht kann sehr klein gewählt werden, was eine dichte Beladung der Palette ermöglicht. Da eine Zwischenablage für die Paketschichten nicht erforderlich ist, kommt die Vorrichtung mit einer geringen Bauhöhe aus. Insgesamt wird durch die Erfindung eine Palettiervorrichtung hoher Produktivität, d.h. hoher Zuführ- und Ablagerate, bei exakter und frei wählbarer Ablageanordnung der Pakete auf der Palette geboten, die in konstruktiver Hinsicht nur relativ geringe Anforderungen stellt.

Die Erfindung wird nun anhand der Zeichnung näher erläutert.

Es zeigen
- Figur 1: eine Draufsicht auf ein Ausführungsbeispiel der Vorrichtung nach der Erfindung entlang der Linie I-I in Figur 2,
- Figur 2: eine Schnittansicht der Vorrichtung entlang der Linie II-II der Figur 1,
- Figur 3: eine Schnittansicht der Vorrichtung entlang der Linie III-III der Figur 1,
- Figur 4: eine Draufsicht entsprechend der Figur 1 in einer anderen Fördererposition und
- Figur 5: eine Draufsicht auf das Ablageende der Vorrichtung entsprechend den Figuren 1 und 4 in einer dritten Ablage- und Fördererposition

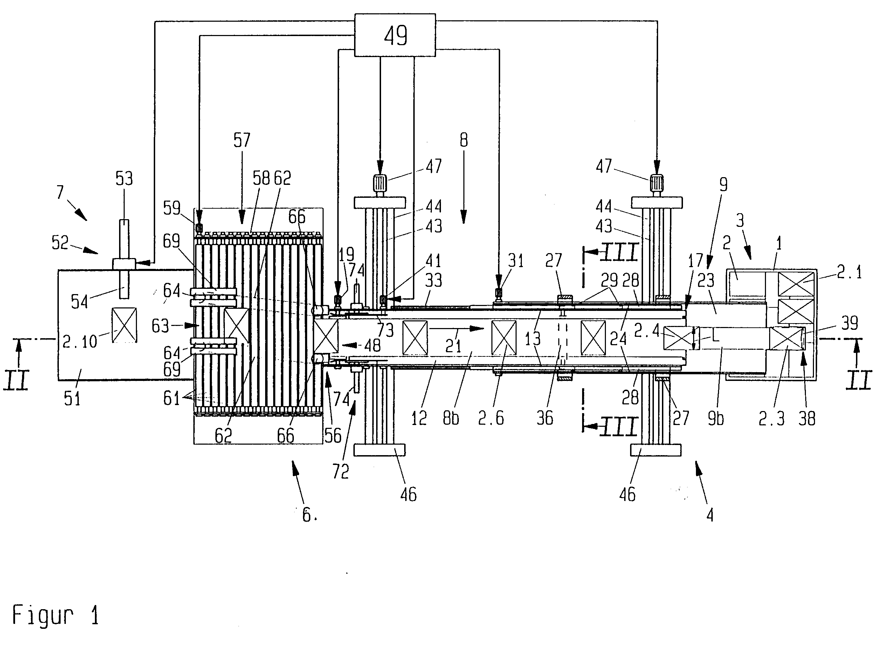

Die Figuren 1, 2 und 3 zeigen ein Ausführungsbeispiel der Palettiervorrichtung nach der Erfindung in drei verschiedenen Ansichten. Gleiche Teile sind in den Figuren jeweils mit denselben Bezugszeichen versehen.

Mit 1 ist eine Palette bezeichnet, auf der Riespakete 2 in einer frei wählbaren Anordnung und in mehreren Schichten übereinander abgelegt werden. Riespakete sind im hier vorliegenden Zusammenhang wenigstens teilweise in Hüllmaterial eingeschlagene Stapel aus aufeinandergeschichteten Bögen aus Papier, Karton, Kunststoff oder dergleichen. Die Palette 1 befindet sich auf einem höhenverstellbaren Palettentisch 3, der Paletten unterschiedlicher Größe aufnehmen kann.

Die als Ausführungsbeispiel dargestellte Palettiervorrichtung weist einen Zuförderer 4, einen Zwischenförderer 6 und eine Beschickungseinrichtung 7 auf.

Der Zuförderer 4 besteht aus zwei Teilförderern, einem Übergabeförderer 8 und einem stromab daran anschließenden Ladeförderer 9. Der Übergabeförderer 8 weist im dargestellten Ausführungsbeispiel eine im wesentlichen U-förmige Förderrinne 11 mit einer Bodenplatte 12 und vertikalen Seitenwangen 13 auf. Über die Bodenplatte 12 läuft das Fördertrum 8b eines Förderbandes 8a, das über unterhalb der Bodenplatte 12 beidseits in den Seitenwangen 13 gelagerte Rollen 14 und 16 und eine am abgabeseitigen Ende 17 des Übergabeförderers 8 an der Stirnseite der Bodenplatte gelagerte Umlenkrolle 18 geführt ist. Über die Rolle 14 wird das Förderband 8a von einem Motor 19 in Förderrichtung 21 angetrieben.

Der Ladeförderer 9 weist eine im wesentlichen U-förmige Förderrinne 22 mit einer Bodenplatte 23 und vertikalen Seitenwangen 24 auf. Die Förderrinne 22 ist breiter als die Förderrinne 11 und umgreift sie von unten, so daß die Bodenplatte 23 des Ladeförderers 9 mit geringem Abstand im wesentlichen parallel unter der Bodenplatte 12 des Übergabeförderers 8 liegt und seine Seitenwangen 24 parallel außerhalb der Seitenwangen 13 des Übergabeförderers 8 verlaufen. Die Bodenplatte 23 des Ladeförderers 9 greift dabei seitlich durch sich unterhalb der Bodenplatte 12 erstreckende Abschnitte der Seitenwangen 13 der Förderrinne 11 hindurch, was durch in den Seitenwangen 13 längsverlaufende Schlitze 26 ermöglicht wird. Um die unterhalb der Schlitze 26 liegenden Abschnitte 13a der Seitenwangen 13 zu stabilisieren, sind die Schlitze mittels die Seitenwangen 24 der Förderrinne 22 umgreifende Bügel 27 zum oberen Rand der Seitenwangen 13 hin überbrückt.

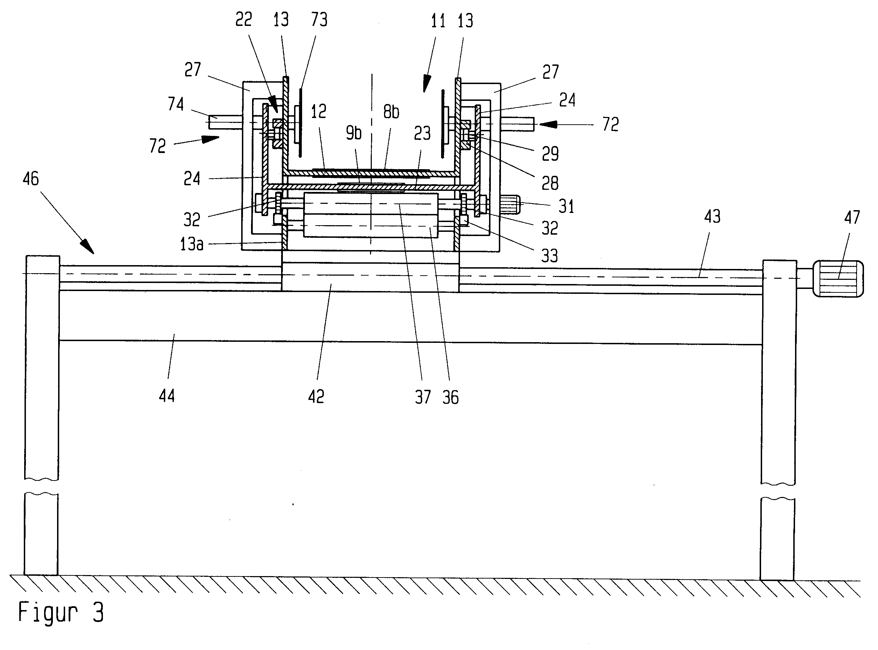

Die Förderrinne 11 des Übergabeförderers 8 und die Förderrinne 22 des Ladeförderers 9 sind in Längsrichtung zueinander verschiebbar miteinander verbunden. Dazu sind an der Außenseite der Seitenwangen 13 des Übergabeförderers 8 in Längsrichtung verlaufende, von parallelen Leisten 28 gebildete Führungsbahnen vorgesehen, in welchen an der Innenseite der Seitenwangen 24 des Ladeförderers 9 gelagerte Führungsrollen 29 geführt sind. Angetrieben wird die Längsverschiebung der Förderrinne 22 relativ zur Förderrinne 11 durch von einem Motor 31 angetriebene, in den Seitenwangen 24 des Ladeförderers gelagerte Zahnräder 32, die mit an den Seitenwangen 13 der Förderrinne 11 des Übergabeförderers 8 parallel zu den Führungsleisten 28 verlaufenden Zahnstangen 33 in Eingriff sind. In der Figur 3 wurde auf der rechten Seite die Lagerkappe der Rolle 36 weggelassen, um diese Zahnstange 33 in der Vorderansicht der Figur 3 sichtbar zu machen.

Über die Bodenplatte 23 der Förderrinne 22 läuft das Fördertrum 9b eines Förderbandes 9a, das über unterhalb der Bodenplatten 12 und 23 beidseits in den Seitenwangen 13 der Förderrinne 11 gelagerte Rollen 34 und 36, eine auf der Achse der Zahnräder 32 in den Seitenwangen 24 der Förderrinne 22 gelagerte Rolle 37 und eine am Ablageende 38 des Ladeförderers 9 an der Stirnseite der Bodenplatte 23 gelagerte Rolle 39 geführt ist. Am Ablageende 38 ist die Bodenplatte 23 schmaler ausgebildet als in den rückwärtigen Bereichen. Die Breite der Bodenplatte 23 entspricht hier etwa der Breite des Förderbandes 9a und ist wie diese höchstens der kleinsten Kantenlänge L (siehe Figur 1) der aufzustapelnden Riespakete gleich. Dadurch ist es möglich, die Riespakete 2 in jeder Orientierung auch in schmale Lücken zwischen bereits abgelegten Paketen einzuführen. Angetrieben wird das Förderband 9a über die Rolle 34 von einem Motor 41.

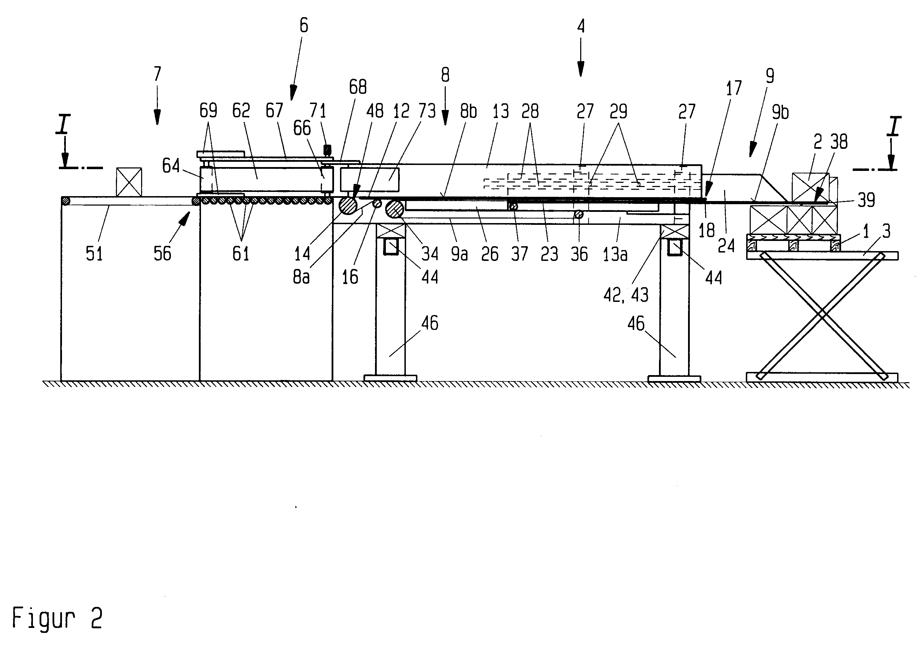

Der Zuförderer 4 samt Übergabeförderer 8 und Ladeförderer 9 sitzt auf Querschlitten 42, die an Querführungen 43 auf Traversen 44 von Portalrahmen 46 gefüht sind. Mit dieser Anordnung ist der gesamte Zuförderer 4 quer zu seiner Förderrichtung 21 verfahrbar. Angetrieben werden die Querschlitten 42 von Motoren 47 über Ketten-, Zahnriemen- oder Spindeltriebe, die als an sich bekannt vorausgesetzt werden und daher keiner Darstellung in der Zeichnung und keiner näheren Beschreibung bedürfen. In der Seitenansicht der Figur 2 sind die Schlitten 42 und die Querführungen 43 lediglich schematisch dargestelt, da dies dem Fachmann geläufige Einzelheiten sind.

Der Übergabeförderer 8 ist in Förderrichtung 21 gesehen stationär angeordnet. Sein Aufgabeende 48 und sein Abgabeende 17 liegen in Bezug auf die Förderrichtung 21 fest. Das Ablageende 38 des Ladeförderers 9 dagegen wird durch Verschieben der Förderrinne 22 in Förderrichtung 21 über der Palette 1 bzw. über dem Palettentisch 3 verschoben, wobei sich die Länge des Fördertrums 9b des Förderbandes 9a verändert. Diese Längenänderungen werden durch eine entsprechende Veränderung der Länge des Rücklauftrums des Förderbandes in der Bandschleife ausgeglichen, die zwischen der ortsfesten Umlenkrolle 36 und der mit der Förderrinne 22 bewegten Umlenkrolle 37 gebildet ist. Durch Verfahren des Ablageendes 38 des Ladeförderers 9 in Längs- bzw. Förderrichtung 21 und zurück relativ zum in Förderrichtung stationären Übergabeförderer 8 und durch Verfahren beider Förderer 8 und 9 gemeinsam auf dem Portalrahmen 46 quer zur Förderrichtung 21 des Zuförderers 4 erreicht das Ablageende 38 jede Ablageposition auf der Palette 1. Die Verfahrwege der Förderer in beiden Richtungen sind zweckmäßigerweise so ausreichend bemessen, daß auf diese Weise ohne aufwendige Umrüstungen und Formatanpassungen Paletten unterschiedlicher Größe beladen werden können.

Der Durchmesser der Umlenkrolle 18 am Abgabeende 17 des Übergabeförderers 8 und der Umlenkrolle 39 am Ablageende 38 des Ladeförderers 9 sind möglichst klein bemessen, um die Fallhöhe der Pakete 2 bei der Übergabe und Ablage gering zu halten. Dadurch ist es möglich, die Pakete auf der Palette sehr dicht hintereinander abzulegen.

Die Motoren 19 für den Antrieb des Übergabeförderers 8, 41 für den Antrieb des Ladeförderers 9, 31 für die Längsverschiebung des Ablageendes 38 und 47 für die Querverschiebung des ganzen Zuförderers 4 sind an eine gemeinsame Steueranordnung 49 angeschlossen, die die Fördergeschwindigkeiten der Förderbänder 8a und 9a und die Längs- und Querbewegungen entsprechend den jeweiligen Gegebenheiten aufeinander abstimmt. Dabei läuft das Förderband 8a des Übergabeförderers 8 im Normalbetrieb vorzugsweise kontinuierlich um. Das Förderband 9a des Ladeförderers 9 wird angetrieben, solange ein Paket auf seinem Fördertrum zum Ablageende 38 hin bewegt wird. Zum Ablegen eines Paketes wird das Förderband 9a angehalten und das Ablageende 38 durch Zurückfahren der Förderrinne 22 mit der Bodenplatte 23 unter dem Paket hinweg zurückgezogen. So ist eine sehr positionsgetreue Ablage der Pakete auf der Palette möglich.

Die Beschickung des Zuförderers 4 mit Paketen 2 erfolgt mittels der Beschickungseinrichtung 7 über den Zwischenförderer 6.

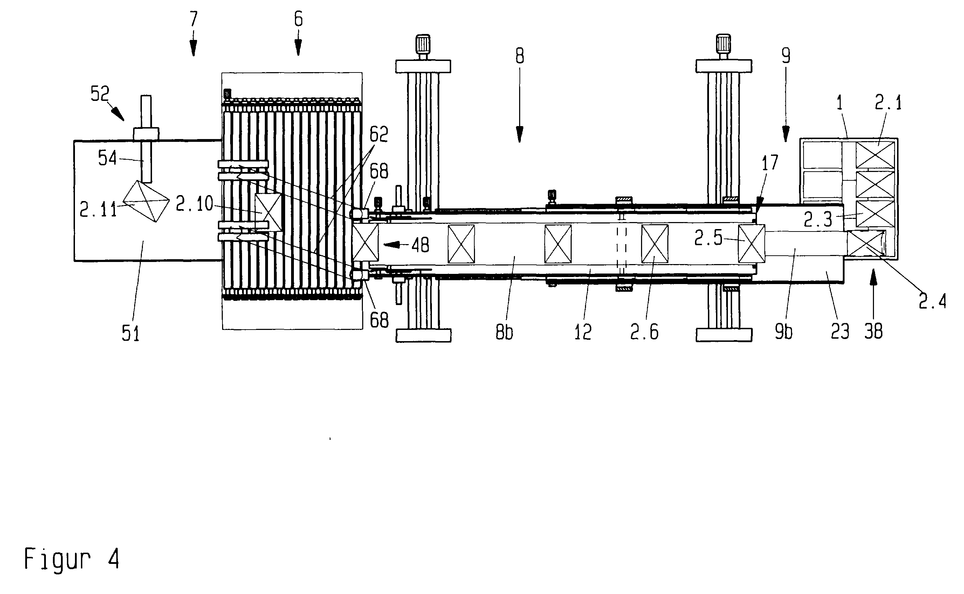

Die Beschickungseinrichtung 7 weist beim dargestellten Ausführungsbeispiel ein Förderband 51 auf, an das eine vorgeschaltete, nicht dargestellte Packmaschine oder eine Fördereinrichtung die zu palettierenden Pakete 2 nacheinander abgibt. Dem Förderband 51 ist eine Dreheinheit 52 zugeordnet, die im dargestellten Fall als Kolben-Zylindereinheit 53 mit einem gesteuert in die Bewegungsbahn der Pakete auf dem Förderer 51 hinein und zurück bewegbaren Kolben 54 ausgebildet ist. Die Dreheinheit 52 dreht bedarfsweise die auf dem Förderer 51 bewegten Pakete 2 in eine jeweils für die Ablage auf der Palette gewünschte Orientierung. Figur 1 zeigt die Dreheinheit in ihrer inaktiven, Figur 4 in ihrer aktiven Stellung. Die Betätigung der Dreheinheit 52 ist von der Steueranordnung 49 steuerbar.

Der Zwischenförderer 6 übernimmt die Pakete 2 in einer definierten, stationären Übergabezone 56 und transportiert sie in in Abhängigkeit von der Querbewegung des Zuförderers 4 veränderlicher Richtung zu dessen Aufgabeende 48. Er weist ein erstes Fördermittel auf, das im dargestellten Fall als Rollenförderer 57 mit in Förderrichtung 21 hintereinander angeordneten, gemeinsam über Ketten oder Zahnriemen 58 von einem Motor 59 angetriebenen Rollen 61 ausgebildet ist. Der Rollenförderer 57 transportiert die Pakete 2 in Förderrichtung 21. Dem Zwischenförderer 6 ist zum Fördern der Pakete 2 in entsprechend der Querposition des Zuförderers 4 wechselnde Richtungen ein zweites Fördermittel in Gestalt von zwei in parallelen vertikalen Ebenen umlaufenden Führungsbändern 62 zugeordnet, deren einander zugewandte Fördertrume einen Förderweg 63 der Pakete auf dem Rollenförderer 57 definieren. Die Führungsbänder 62 laufen um vertikal an gemeinsamen Trägern 67 gelagerte Rollen 64 und 66 um. Für die Umlenkrollen 64 und 66 eines jeden Führungsbandes 62 ist jeweils separat ein gemeinsamer Träger 67 vorgesehen. Angetrieben werden die Führungsbänder über die Umlenkrollen 66 von Motoren 71, die von der Steueranordnung 49 gesteuert werden. Über Verbindungselemente 68 sind die Träger 67 um die Achsen der Rollen 66 schwenkbar an dem Zuförderer 4 angelenkt. Durch diese Verbindung sind die stromabwärtigen Umlenkrollen 66 der Führungsbänder 62 an das Aufgabeende 48 des Übergabeförderers 8 des Zuförderers 4 angekoppelt, so daß sie immer den Querbewegungen des Zuförderers 4 folgen. Der durch die Führungsbänder 62 vorgegebene Förderweg 63 verläuft auf diese Weise immer von der stationären Übergabezone 56 zum verschiebbaren Aufgabeende 48 des Zuförderers 4.

Da die Querbewegung der Umlenkrollen 66 eine Längsbeweglichkeit der Umlenkrollen 64 im Bereich der Übergabezone 56 erfordert, sind in Förderrichtung 21 ausgerichtete Längsführungen 69 vorgesehen, in denen die Achsen der vorderen Umlenkrollen 64 bzw. die vorderen Enden der Träger 62 beweglich geführt sind.

Die Geschwindigkeiten der Rollen 61 des Rollenförderers 57 und der Führungsbänder 62 sind durch die Steueranordnung 49 so aufeinander abgestimmt, daß die Pakete 2 im Förderweg 63 die Orientierung, die sie beim Eintritt in den Förderweg haben, im wesentlichen beibehalten. Da aber dennoch kleine Abweichungen von der gewünschten Orientierung auftreten können, ist dem Übergabeförderer 8 eine Ausrichteinheit 72 zugeordnet. Diese weist beidseits des Förderweges der Pakete aufeinander zu und zurück bewegbare Ausrichtplatten 73 auf, die auf dem Förderband 8a zwischen den Platten befindliche Pakete ausrichten. Betätigt werden die Ausrichtplatten 73 von Kolben-Zylinder-Einheiten 74.

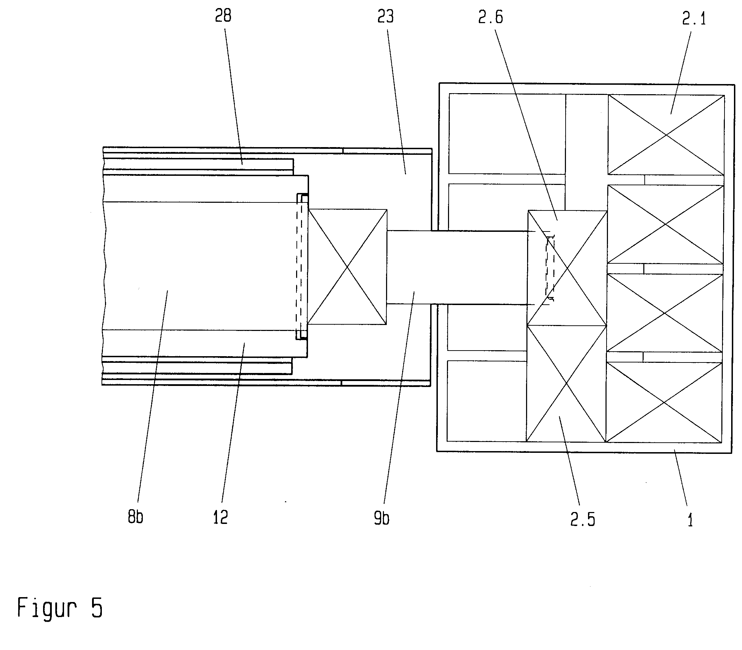

Die Funktionsweise der Vorrichtung ist, soweit sie nicht schon aus der bisherigen Beschreibung ersichtlich ist, in den Figuren 1, 4 und 5 zu erkennen. In der Darstellung der Figur 1 legt der Ladeförderer 9 gerade das dritte Paket 2.3 der ersten Reihe einer Schicht von Paketen auf der Palette 1 ab. Darunter liegt bereits eine komplette Schicht von Paketen. In der ersten Reihe der zweiten Schicht liegen die Pakete in Längsrichtung orientiert. Das nächste Paket 2.4 ist ebenfalls noch in Längsrichtung orientiert, während die folgenden Pakete, die in den nächsten Reihen auf der Palette abgelegt werden, quer orientiert sind. Die querorientierten Pakete gehen ungehindert an der Dreheinheit 52 der Beschickungseinrichtung 7 vorbei, wie das die Figur 1 zeigt. Figur 4 zeigt die Ablage des Pakets 2.4 in der ersten Reihe ganz rechts auf der Palette 1. Der ganze Zuförderer 4 ist dazu aus der in Figur 1 gezeigten Position weiter nach rechts gefahren, wobei ihm die Umlenkrollen 66 der Führungsbänder 62 des Zwischenförderers 6 gefolgt sind, so daß die Pakete weiter über den Zwischenförderer zum Aufgabeende 48 des Zuförderers gelangen können. Hier zeigt sich auch, daß die Breite des Ladeförderers 9 an seinem Ablageende 38 das Einführen der Pakete 2 über ihre Schmalseite in enge Positionen erlaubt. Da nach einigen querorientierten Paketen 2.5 bis 2.10 die nächsten Pakete wieder in Längsrichtung orientiert abgelegt werden sollen, ist die Dreheinheit 52 gemäß Figur 4 aktiviert, so daß der Kolben 54 in die Förderbahn der Pakete eingreift und das Paket 2.11 und die folgenden in die gewünschte Orientierung dreht. Figur 5 zeigt die Ablage der ersten querorientierten Pakete 2.5 und 2.6 auf der Palette 1. Durch die versetzte Orientierung der abgelegten Pakete in Längs- und Querrichtung ergibt sich ein sehr stabiler Stapelaufbau auf der Palette. Die Ablage aufeinanderfolgender Stapel 2 auf der Palette 1 erfordert immer nur kurze Bewegungen des Ladeförderers 9 und des Zuförderers 4 in Längs- und Querrichtung und erlaubt auf diese Weise eine hohe Zufuhr- und Ablagerate, was eine hohe Produktivität der Vorrichtung gewährleistet.

## Patentansprüche

1. Palettiervorrichtung, insbesondere für verpackte Stapel aus Papierbögen oder dergl., mit einem Palettentisch und einem Zuförderer, dessen Ablageende in Förderrichtung über dem Palettentisch vor und zurück verfahrbar ist, dadurch gekennzeichnet, daß wenigstens das Ablageende (38) des Zuförderers (4) über dem Palettentisch (3) zusätzlich auch quer zur Förderrichtung (21) verfahrbar ist.

2. Vorrichtung nach Anspruch 1, dadurch gekennzeichnet, daß der ganze Zuförderer (4) im wesentlichen über die gesamte Palettenbreite quer zu seiner Förderrichtung (21) verfahrbar ist.

3. Vorrichtung nach Anspruch 1 oder 2, dadurch gekennzeichnet, daß der Zuförderer (4) aus wenigstens zwei in Förderrichtung (21) aufeinanderfolgenden Teilförderern (8,9) besteht, daß der erste Teilförderer als Übergabeförderer (8) mit in Förderrichtung (21) ortsfestem Aufgabe- und Abgabeende (48 bzw. 17) ausgebildet ist und daß der zweite Teilförderer als sich an das Abgabeende (17) des Übergabeförderers (8) anschließender Ladeförderer (9) ausgebildet ist, dessen Ablageende (38) über dem Palettentisch (3) in Förderrichtung (21) vor und zurück bewegbar ist.

4. Vorrichtung nach Anspruch 3, dadurch gekennzeichnet, daß die Teilförderer (8,9) auf einem gemeinsamen Schlitten (42) angeordnet und mit diesem quer zu ihrer Förderrichtung (21) verfahrbar sind.

5. Vorrichtung nach Anspruch 3 oder 4, dadurch gekennzeichnet, daß wenigstens ein Teilförderer (8,9) des Zuförderers (4) als Bandförderer ausgebildet ist.

6. Vorrichtung nach einem der Ansprüche 1 bis 5, dadurch gekennzeichnet, daß wenigstens das Ablageende (38) des Zuförderers (4) nicht breiter als die schmalste Seitenkante (L) der zu palettierenden Gegenstände (2) ist.

7. Vorrichtung nach einem der Ansprüche 1 bis 6, dadurch gekennzeichnet, daß die Förderer (8,9), das Ablageende (38) des Zuförderers (4) und der den Zuförderer tragende Schlitten (42) jeweils mit separaten Antrieben (19,41,31,47) versehen sind, daß alle Antriebe an eine gemeinsame Steueranordnung (49) angeschlossen sind und daß die Steueranordnung die Antriebe im Sinne der Ablage der Gegenstände (2) auf der Palette (1) in einer vorgegebenen Ordnung steuernd ausgebildet ist.

8. Vorrichtung nach einem der Ansprüche 1 bis 7, dadurch gekennzeichnet, daß dem Zuförderer (4) zum ablagegerechten Ausrichten der Gegenstände (2) eine Ausrichteinheit (72) zugeordnet ist.

9. Vorrichtung nach einem der Ansprüche 1 bis 8, dadurch gekennzeichnet, daß eine stationäre Beschickungseinrichtung (7) zum Beschicken des Zuförderers (4) mit zu palettierenden Gegenständen (2) vorgesehen ist und daß zwischen der Beschickungseinrichtung (7) und dem Aufgabeende (48) des Zuförderers (4) ein seine Förderrichtung in Abhängigkeit von der Querbewegung des Zuförderers (4) verändernder Zwischenförderer (6) zum Fördern der Gegenstände von der Beschickungseinrichtung zum Zuförderer angeordnet ist.

10. Vorrichtung nach Anspruch 9, dadurch gekennzeichnet, daß der Zwischenförderer (6) ein die Gegenstände (2) tragendes und von der stationären Beschickungseinrichtung (7) in einer vorgegebenen Förderrichtung zum Zuförderer (4) hin bewegendes erstes Fördermittel (57) und ein die Gegenstände auf dem ersten Fördermittel (57) in Abhängigkeit von der Querbewegung des Zuförderers (4) quer zur Förderrichtung (21) des ersten Fördermittels (57) verschiebendes zweites Fördermittel (62) aufweist.

11. Vorrichtung nach Anspruch 9 oder 10, dadurch gekennzeichnet, daß der Zwischenförderer (6) ein erstes (57) und ein zweites Fördermittel (62) aufweist und daß das erste Fördermittel als Band oder Rollenförderer (57) ausgebildet ist, dessen Breite quer zu seiner Förderrichtung (21) wenigstens etwa der Breite der zu beladenden Paletten (1) gleich ist.

12. Vorrichtung nach einem der Ansprüche 9 bis 11, dadurch gekennzeichnet, daß der Zwischenförderer (6) ein erstes (57) und ein zweites Fördermittel (62) aufweist und daß das zweite Fördermittel (2) über dem ersten Fördermittel (57) um vordere (66) und hintere (64) Umlenkrollen mit vertikalen Achsen umlaufende Führungsbänder (62) aufweist, deren einander zugewandte Fördertrume auf dem ersten Fördermittel (57) einen Förderweg (63) definieren, deren eingangsseitige Umlenkrollen (64) der Beschickungseinrichtung (7) und deren abgabenseitige Umlenkrollen (66) dem Aufgabeende (48) des Zuförderers (4) zugeordnet und mit diesem verfahrbar sind.

13. Vorrichtung nach einem der Ansprüche 1 bis 12, dadurch gekennzeichnet, daß eine Beschickungseinrichtung (7) mit einem Beschickungsförderer (51) vorgesehen ist und daß dem Beschickungsförderer eine Dreheinheit (52) zum Drehen von auf dem Beschickungsförderer geförderten Gegenständen (2) in eine vorgegebene Winkelposition zugeordnet ist.

14. Vorrichtung nach einem der Ansprüche 1 bis 13, dadurch gekennzeichnet, daß der Palettentisch (3) zur Bildung mehrerer Schichten von Gegenständen (2) auf den Paletten (1) höhenverstellbar ausgebildet ist.
